Europäisches Patentamt

European Patent Office

Office européen des brevets

(19)

(11) Numéro de publication: **0 026 135**
**B1**

(12) **FASCICULE DE BREVET EUROPEEN**

(45) Date de publication du fascicule du brevet: **08.01.86**

(51) Int. Cl.⁴: **H 04 L 1/24**

(21) Numéro de dépôt: **80401317.5**

(22) Date de dépôt: **16.09.80**

(54) **Procédé de test d'une ligne de transmission de données numériques entre deux modems et dispositif mettant en oeuvre ce procédé.**

(30) Priorité: **18.09.79 FR 7923241**

(43) Date de publication de la demande:
**01.04.81 Bulletin 81/13**

(45) Mention de la délivrance du brevet:
**08.01.86 Bulletin 86/02**

(84) Etats contractants désignés:
**BE DE GB IT NL**

(56) Documents cités:
**FR-A-2 317 829**
**US-A-3 786 187**
**US-A-3 976 835**

(73) Titulaire: **LIGNES TELEGRAPHIQUES ET TELEPHONIQUES L.T.T.**
**1, rue Charles Bourseul**
**F-78702 Conflans-Ste-Honorine (FR)**

(72) Inventeur: **Gregoire, Michel**
**"THOMSON-CSF" - SCPI 173, Bld Haussmann**
**F-75360 Paris Cedex 08 (FR)**
Inventeur: **Vuillemin, Jean-Claude**
**"THOMSON-CSF" - SCPI 173, Bld Haussmann**
**F-75360 Paris Cedex 08 (FR)**

(74) Mandataire: **Weinmiller, Jürgen et al**
**Zeppelinstrasse 63**
**D-8000 München 80 (DE)**

Courier Press, Leamington Spa, England.

**Description**

L'invention se rapporte au domaine des communications de données numériques et elle a plus particulièrement pour objet un procédé de test automatique d'une ligne de transmission de données connectée entre deux ou plusieurs modems. L'invention a également pour objet un dispositif pour la mise en oeuvre de ce procédé.

Lorsqu'on désire traiter des informations à distance, il est connu de relier une unité centrale de traitement de données à un ou plusieurs organes périphériques, de saisie et de visualisation de ces données par exemple, par une voie de transmission telle qu'une ligne téléphonique. Il est connu d'utiliser alors des dispositifs modulateurs-démodulateurs de données numériques, ou modems, comme interfaces entre la voie de transmission de données et les unités de traitement de ces données, à chaque extrémité de la ligne.

En ce qui concerne la maintenance de tels systèmes, le faible coût relatif des modems vis-à-vis des systèmes de traitement de données proprement dits pose un problème d'ordre économique pour le fabricant des modems. En effet, d'une part pour l'utilisateur du système, le non fonctionnement d'une liaison provoque l'immobilisation de matériels coûteux: il désire en conséquence un dépannage rapide; d'autre part, pour le fabricant de modems, les interventions rapides pour la vérification des liaisons sont financièrement très lourdes vis-à-vis du prix du matériel fabriqué.

Différents systèmes de test tendant à résoudre cette difficulté sont connus à ce jour, parmi lesquels on peut citer le générateur et compteur d'erreurs, qui est un dispositif distinct du modem, que l'on connecte à celui-ci et qui permet de faire transiter sur la liaison une séquence déterminée de signaux; cette séquence est soit analysée à l'autre extrémité de la ligne par un second dispositif générateur et compteur d'erreurs, soit renvoyée sur la même ligne par le modem situé à l'autre extrémité de la ligne, rebouclé sur lui-même. Cette solution présente différents inconvénients, notamment le coût du matériel de test qui est distinct du modem, le manque de précision du diagnostic d'erreur lorsque l'on n'utilise qu'un seul dispositif de test, et la nécessité d'avoir deux opérateurs qualifiés et deux dispositifs de test lorsque la source de l'erreur doit être localisée plus précisément.

On sait également, de la demande de brevet français 2 317 829, réaliser un procédé automatique de vérification du bon fonctionnement d'un système de transmissions de données, qui donne une indication de bon fonctionnement ou pas d'indication du tout. Toutefois, un tel procédé ne permet pas à lui seul de localiser un éventuel défaut de fonctionnement; en particulier, lors d'erreurs intervenant sur la ligne de transmission, il ne permet pas d'identifier le sens de transmission défectueuse.

La présente invention a pour object un procédé et un dispositif de test automatique d'une liaison entre deux ou plusieurs modems, quel que soit le mode de fonctionnement de la liaison, ne présentant pas les insuffisances précédentes, ces dispositifs étant susceptibles d'être intégrés aux modems eux-mêmes et le test étant déclenché par une commande unique à l'une quelconque des extrémités de la liaison, sans intervention manuelle à l'autre extrémité.

Plus précisément, le procédé de test automatique selon l'invention comporte principalement les étapes suivantes:

— l'émission d'un message de test prédéfini par le premier modem, choisi comme origine du test, vers le second modem, situé à l'autre extrémité de la ligne à tester;
— la réception de ce message par le modem extrémité;
— la comparaison du message reçu avec le message de test, fournissant une information représentant l'existence ou la non existence d'erreurs de transmission dans le sens modem origine vers modem extrémité, dite information d'erreur aller;

ledit procédé étant caractérisé par le fait qu'il comporte en outre:

— l'émission par le modem extrémité d'un premier message qui est constitué par le message de test prédéfini, et d'un second message, contenant l'information d'erreur aller;
— la réception par le modem origine des deux messages;
— la comparaison de la partie des messages reçus correspondant au premier message fournissant une information représentant l'existence ou la non existence d'erreurs de transmission dans le sens modem extrémité vers modem origine, dite information d'erreurs retour;
— la reconnaissance de l'information d'erreur aller à partir de la partie des messages reçus correspondant au second message.

L'invention a également pour objet un dispositif mettant en oeuvre ce procédé.

D'autres objets, caractéristiques et résultats de l'invention ressortiront de la description suivante, donnée à titre d'exemple non limitatif et illustrée par les dessins annexés, qui représentent:

— la figure 1, le schéma du procédé de test de liaison selon l'invention;
— la figure 2, le schéma d'un mode de réalisation du dispositif selon l'invention;
— la figure 3, des diagrammes de signaux susceptibles d'être appliqués au dispositif selon l'invention, ou produits par lui, dans un premier mode de fonctionnement de la liaison;
— la figure 4, des diagrammes de signaux susceptibles d'être appliqués au dispositif selon l'invention, ou produits par lui, dans un second mode de fonctionnement de la liaison;

**0 026 135**

— la figure 5, le détail de l'une des étapes du procédé illustré sur la figure 1.

Sur ces différentes figures, les mêmes références se rapportent aux mêmes éléments.

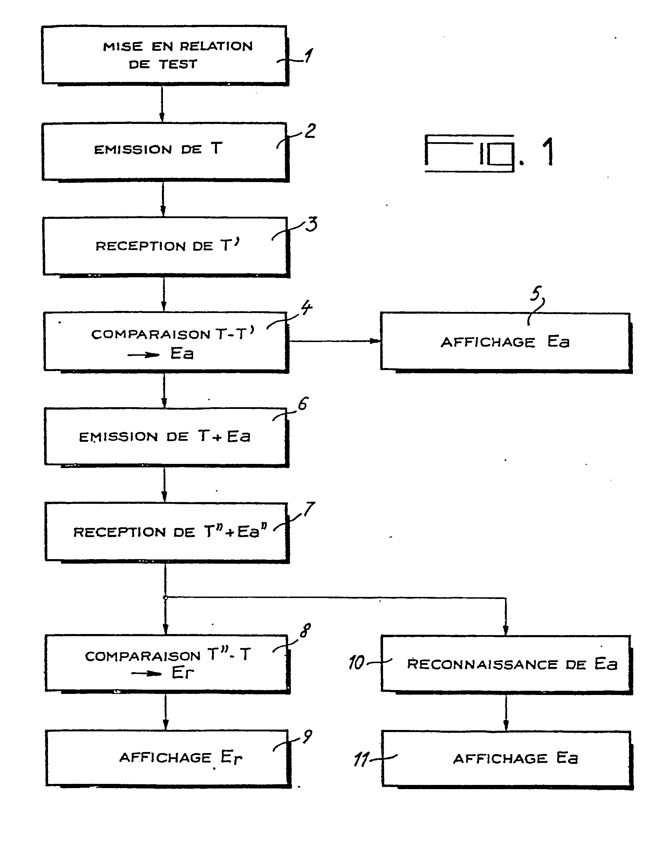

La figure 1 représente donc le procédé de test suivant l'invention d'une liaison entre deux modems, l'un de ces modems étant par exemple relié à une unité centrale de traitement de données, l'autre modem étant relié à un des organes périphériques du système, qui peut en comporter plusieurs.

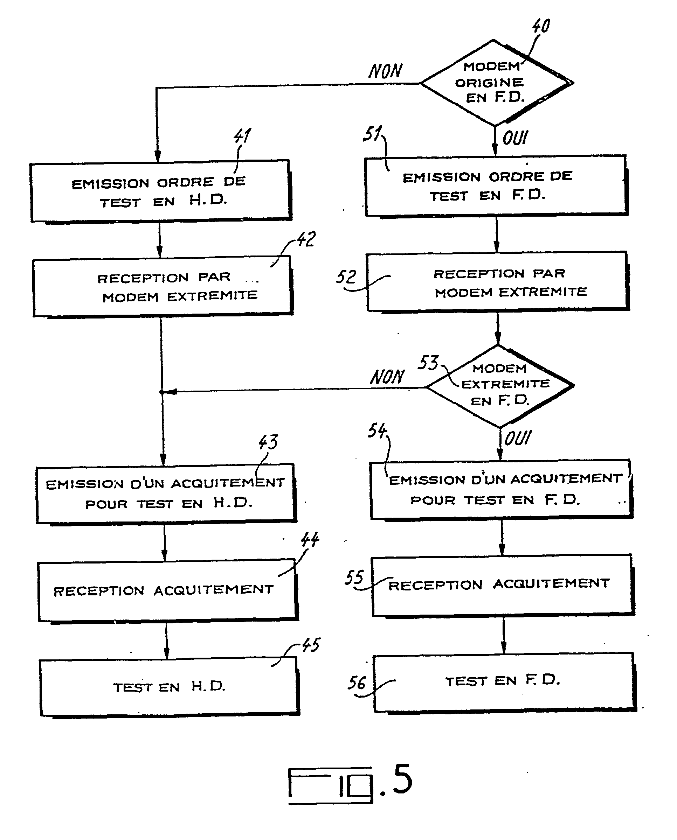

La première étape du procédé est une étape préliminaire de mise en relation des deux modems concernés par le liaison à tester. Ceci est représenté un bloc 1 sur la figure. Cette mise en relation se fait selon une procédure quelconque propre aux modems utilisés. Un mode de réalisation préféré de ces procédures est décrit ci-après (figure 5).

La première étape du procédé de test proprement dit, effectuée immédiatement après la mise en relation précédente, est illustrée par un bloc 2 sur la figure. Elle consiste en l'émission d'un message prédéfini, appelé T, par l'un des modems, chois comme origine, c'est-à-dire d'où est déclenché le test et où viendront s'afficher les résultats de ce test, vers l'autre modem, appelé modem extrémité. Il est à noter que les modems situés aux deux extrémités de la liaison sont de préférence identiques et que, en conséquence, l'une quelconque de ces deux modems peut être utilisé comme modem origine.

L'étape suivante, repérée 3 sur la figure, consiste en la réception du message T par le modem extrémité; ce message reçu est appelé T', et suivant que la transmission s'est effectuée sans ou avec erreur, il est ou n'est pas identique à T.

L'étape suivante, repérée 4 sur la figure, consiste pour le modem extrémité à effectuer la comparaison du message T' qu'il a reçu avec le message T qui a été émis, Le modem en déduit l'existence ou la non existence d'une ou plusieurs erreurs de transmission dans le sens modem origine vers modem extrémité, appelées erreurs aller. Cette information est appelée $E_a$.

Dans un mode de réalisation, cette information $E_a$ est affichée sur le modem extrémité (étape 5).

Parallèlement à cet affichage, le modem extrémité émet vers le modem origine un message comportant le message T précédent, accompagné d'un message représentant l'erreur $E_a$ (étape 6).

L'étape suivante, repérée 7 sur la figure, est la réception par le modem origine du message émis dans l'étape précédente, le message reçu étant référencé $T'' + E''_a$. Ce message est traité de deux façons:

— d'une part (étape 8 sur la figure), le modem origine effectue la comparaison du message T'' reçu avec le message T et il en déduit, comme précédemment le modem extrémité (étape 4), l'existence ou la non-existence d'erreurs de transmission dans le sens modem extrémité vers modem origine; cette information, appelée erreur retour, est notée $E_r$; elle est affichée sur le modem origine: c'est l'étape repérée 9 sur la figure;

— d'autre part (bloc 10 sur la figure), le modem origine doit effectuer une interprétation du message $E_a''$ reçu, parce que ce dernier est susceptible d'être entaché d'erreurs, afin de reconstituer le message $E_a$ initial; celui-ci est alors affiché (bloc 11 sur la figure) sur le modem origine.

Il apparaît ainsi que le déclenchement de l'ensemble du test est effectué à partir du modem origine, sans aucune intervention manuelle au niveau du modem extrémité et que toutes les informations (erreur aller et erreur retour) sont affichées au niveau de modem origine.

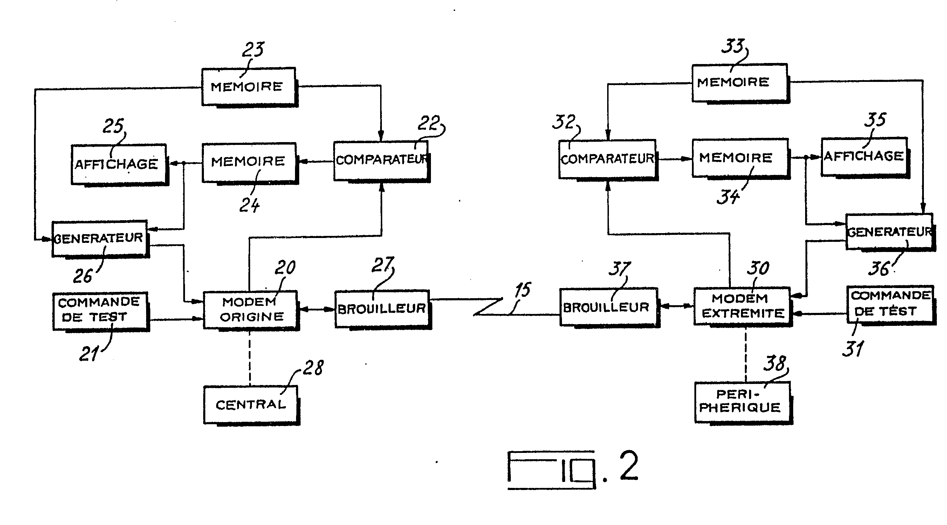

Le procédé décrit ci-dessus peut être mis en oeuvre par tous moyens. A titre d'exemple, la figure 2 représente le schéma d'un mode de réalisation d'un dispositif conforme à l'invention, mettant en oeuvre ce procédé de test.

Ce dispositif comporte deux systèmes modulateurs-démodulateurs pour données numériques (modems), 20 et 30 sur la figure, reliés par une voie de transmission de données 15, constituée par exemple par une ligne téléphonique. L'un de ces modems, par exemple le modem 20, est relié à une unité centrale de traitement de données 28; l'autre modem 30 est relié par exemple à l'une des unités périphériques 38 telle qu'unités de saisie de données ou de visualisation, qui doit dialoguer avec l'unité centrale 28.

A chacun des modems sont associés un ensemble de circuits électroniques: circuits 21 à 27 pour le modem 20 et circuits 31 à 37 pour le modem 30, ces circuits assurant la réalisation du procédé décrit précédemment.

L'un de ces deux modems est choisi comme modem origine; ce peut-être le modem 20 relié à l'unité centrale comme le modem 30 relié à une unité périphérique. A titre d'exemple, dans la description qui suit, c'est le modem 20 qui est choisi comme origine.

Au modem 20 est relié un élément 21 de commande de la mise en relation du modem 20 avec un autre modem du réseau, ici le modem 30. Cet élément de commande 21 réalise l'étape préliminaire 1 de la figure 1.

Au modem 20 est également relié un générateur 26, qui a pour fonction d'engendrer les signaux nécessaires au test. Pour le modem origine 20 et pour l'étape 2 du procédé de la figure 1, il s'agit du signal T. La forme du signal T est prédéfinie et contenue dans un élément de mémoire 23, qui la fournit au générateur 26.

Dans un mode de réalisation préféré, comme représenté sur la figure, la sortie du modem 20 est reliée à un dispositif brouilleur-débrouilleur 27 de type pseudo-aléatoire, qui a pour fonction de brouiller d'une façon connue le signal T émis par le modem, et auquel correspond un dispositif brouilleur-débrouilleur 37 autosynchronisable, placé à l'autre extrémité de la ligne 15 avant le modem extrémité 30. En effet, ainsi qu'il est connu, l'insertion d'un brouillage dans le dispositif permet d'utiliser des messages de test simples à engendrer et à reconnaître, sans se trouver placé de ce fait dans des conditions de transmission trop favorables.

Pour réaliser l'étape 4 du procédé de la figure 1, le modem extrémité 30 est relié à un comparateur 32 qui réalise la comparaison du signal T' reçu avec le signal T, qui lui est fourni par une mémoire 33 analogue à la mémoire 23 précédente. De cette comparaison est déduite l'information d'erreur aller $E_a$. Celle-ci est fournie à un élément 34 tel qu'une mémoire, qui fournit un message suffisamment redondant représentant l'erreur aller $E_a$ et qui peut être, par exemple, une suite de bits de même valeur. Ce message est transmis d'une part à un dispositif d'affichage 35 et d'autre par à un générateur 36, analogue au générateur 26, relié au modem 30. Le générateur 36 est par ailleurs relié à la mémoire 33 pour assurer l'émission d'un message représentant à la fois le signal T et l'information d'erreur aller $E_a$.

L'étape 6 du procédé de la figure 1 est alors réalisée à travers les brouilleurs-débrouilleurs 37 et 27 et la ligne 15.

L'étape 8 du procédé de la figure 1 est réalisée par un élément 22, analogue à l'élément 32, qui reçoit le message retour $T''+E''_a$. Il réalise à cet effet le comparaison $T-T''$, ce qui fournit l'indication des éventuelles erreurs dans le sens retour à un élément 24, analogue à un élément 34 précédent, qui fournit un signal $E_r$ représentant l'erreur retour et le transmet à un dispositif d'affichage 25.

D'autre part, l'élément 22 réalise l'étape 10 de reconnaissance du signal $E_a$ à partir du signal $E_a''$ reçu. Dans le cas où le signal $E_a$ est une suite de bits de même valeur, cette reconnaissance se fait par un comptage des bits ayant la valeur représentant une erreur:— lorsque le nombre obtenu est supérieur à un certain seuil, l'existence d'une erreur aller est reconnue; au contraire, lorsque ce nombre est inférieur au seuil, l'erreur aller est considérée comme nulle, seul le message $E_a$ étant entaché d'erreur, dans sa transmission du modem extrémité vers le modem origine (sens retour). Cette information $E_a$ reconnue est transmise à l'élément 24 puis à l'afficheur 25.

Ainsi qu'il est dit plus haut, afin que les modems soient interchangeables et que le test puisse être déclenché indifféremment à l'une ou l'autre des extrémités d'une ligne, il est nécessaire qu'ils soient identiques. A cet effet, les circuits 21 à 27 reliés au modem 20 sont identiques aux circuits correspondants 31 à 37 du modem 30 ou, au moins, assurent les mêmes fonctions et, ce, de façon compatible.

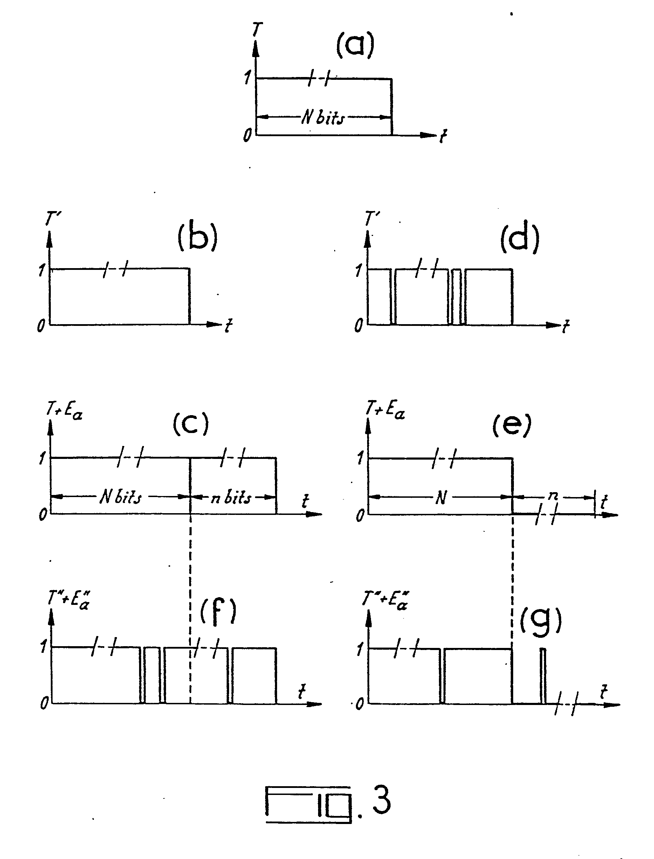

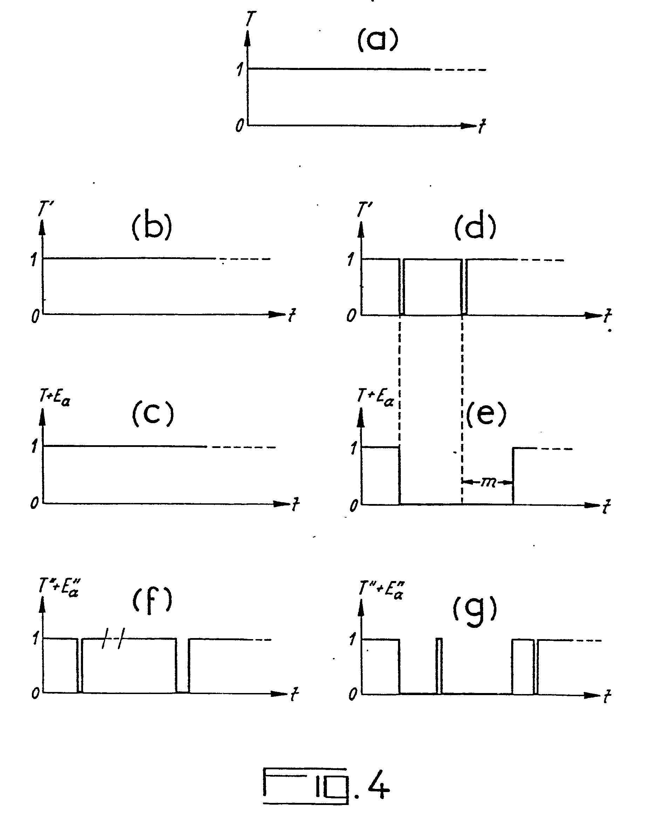

La figure 3 et la figure 4 représentent des diagrammes de signaux appliqués au dispositif précédent, ou fournis par lui, selon le mode de fonctionnement de la liaison: la figure 3 représente les signaux correspondant à un fonctionnement dit en "half duplex" ou alternat ou semi-duplex, c'est-à-dire un mode de fonctionnement dans lequel les modems utilisent la ligne de transmision 15 l'un après l'autre; la figure 4 correspond à un fonctionnement connu sous le nom de "full duplex" ou duplex intégral, mode de fonctionnement dans lequel les modems peuvent utiliser la ligne 15 en même temps, ceci étant rendu possible soit par l'attribution de bandes de fréquence différentes aux informations selon leur sens de parcours, soit à un dédoublement des connexions électriques.

La figure 3 représente donc les signaux utilisés en fonctionnement "half duplex".

Le diagramme 3a représente le signal T. Il est par exemple constitué par une suite de N bits à la valeur 1.

Le diagramme 3b représente le signal T' reçu par le modem 30 lorsque la liaison est correcte: T' est identique alors à T.

Le diagramme 3c représente le message qui est renvoyé par le modem 30. Ce message comporte le signal T précédent, c'est-à-dire N bits de valeurs 1, auquel est ajouté un signal sur $n$ bits, représentant l'erreur $E_a$. Lorsque, comme dans le cas du diagramme 3b, il n'y a pas d'erreur aller, cette information est représentée par $n$ bits égaux à 1. Le modem 30 envoie donc N+n bits égaux à 1.

Lorsque le liaison est mauvaise, le signal T' reçu par le modem extrémité 30 a une forme voisine de celle qui est représentée sur la figure 3d, c'est-à-dire que le signal reçu comporte un certain nombre (a) de bits égaux à zéro.

Dans ce cas, le message envoyé en retour par le modem extrémité 30 (diagramme 3e) comporte également deux parties: la première partie est toujours le signal T, c'est-à-dire N bits égaux à 1, mais la seconde partie qui indique l'erreur aller est constituée par $n$ bits égaux à zéro.

Dans le sens retour, du modem extrémité au modem origine, et lorsque la liaison est correcte, le signal reçu $T''+E_a''$ est identique au signal $T+E_a$ émis;

— dans le cas de la figure 3c, le modem origine recevant le signal T à l'identique, l'élément 22 en déduit que l'erreur retour est nulle, puis recevant $n$ bits tous égaux à 1, en déduit que l'erreur aller est nulle également;
— dans le cas de la figure 3e, l'élément 22 recevant les $n$ derniers bits tous égaux à zéro, en déduit que l'erreur aller n'est pas nulle.

Lorsque la transmission retour est mauvaise, il est reçu par le modem origine 20 un signal illustré sur la figure 3f dans le cas où le signal émis est celui de la figure 3c, ou un signal illustré figure 3g dans le cas où le signal émis est celui de la figure 3e. Comme précédemment, la comparaison à T des N premiers bits fournit l'indication de l'erreur retour $E_r$, qui est égale à 1 dans les deux cas. En ce qui concerne l'erreur aller, lélément 22 compte le nombre de bits $b$ qui sont à l'état zéro. Si ce nombre $b$ est inférieur à n/2, il est décidé que l'erreur aller est nulle; si au contraire $b$ est supérieur à n/2, l'erreur aller est considérée comme non nulle.

La figure 4 représente ces signaux dans le cas d'un fonctionnement en "full duplex".

La figure 4a représente le signal T: la différence avec la figure 3a est que le signal T n'est plus limité à N bits mais est continu, pendant tout la durée du test.

De la même manière, la figure 4b représente le signal T' reçu par le modem extrémité lorsque la transmission est bonne. Il est donc identique au signal T.

La figure 4c représente le message $T+E_a$ émis par le modem extrémité en direction du modem origine. De façon analogue à ce qui est décrit précédemment pour la transmission "half duplex", le message $T+E_a$ correspondant à une erreur aller nulle est une suite, qui est ici continue, de bits égaux à 1.

Le diagramme de la figure 4d représente le signal T' reçu par le modem extrémité lorsque la transmission est mauvaise dans le sens aller: par rapport au signal T, il comporte un certain nombre d'erreurs, c'est-à-dire des bits égaux à zéro.

La figure 4e représente le message $T+E_a$ qui est envoyé dans ce dernier cas par le modem extrémité au modem origine. Il est tout d'abord égal à 1 puis passe au niveau zéro lors du premier bit erroné détecté; il reste au niveau zéro pendant $m$ bits à partir de la dernière erreur détectée.

Comme dans le cas du fonctionnement "half duplex", lorsque la liaison retour n'est pas perturbée, les signaux reçus par le modem origine sont identiques aux signaux émis par le modem extrémité et ne sont pas représentés.

Le diagramme de la figure 4f représente le message $T''+E_a''$ reçu par le modem origine lorsque le modem extrémité a envoyé le signal $T+E_a$ de la figure 4c et que la transmission est mauvaise. Comme pour la figure 4d précédente, la mauvaise qualité de la liaison se traduit par des bits erronés (égaux à zéro).

Sur la figure 4g au contraire, qui correspond à une mauvaise transmission du message $T+E_a$ de la figure 4e, les erreurs se traduisent par des bits égaux à 1 lorsque ces erreurs se produisent dans l'intervalle des $m$ bits représentant l'erreur aller $E_a$.

L'interprétation des erreurs se fait de la manière suivante, analogue à ce qui est décrit précédemment: le modem origine compte le nombre $c$ des bits égaux à zéro; lorsque ce nombre $c$ est inférieur à m/2, on en déduit que l'erreur dont il s'agit est une erreur retour; par contre, lorsque le nombre $c$ est supérieur à m/2 on en déduit l'existence d'une erreur sur la voie aller.

A titre d'exemple, N, $n$ et $m$ sont du même ordre de grandeur, voisins de 50 bits.

La figure 5 représente un mode de réalisation de l'étape préliminaire (1) du procédé décrit figure 1 et mise en oeuvre par les éléments de commande 21 et 31 des modems 20 et 30 de la figure 2.

Cette étape a pour fonction d'assurer outre la mise en relation à des fins de test des deux modems concernés, le choix automatique du mode de liaison dans lequel se déroulera le test, c'est-à-dire "half duplex" ou "full duplex". En effet, dans la phase préliminaire comme dans le reste du procédé, le même principe est retenu, à savoir la commande de toutes les fonctions par un seul modem, choisi comme origine; d'autre part, surtout dans le cas d'un réseau multi-points, les deux modems concernés peuvent ne pas se trouver dans le même état de fonctionnement: il est fréquent que le modem relié à l'unité centrale fonctionne en "full duplex" alors qu'un certain nombre des modems reliés aux unités périphériques fonctionnent en "half duplex"; dans ce dernier cas, la procédure de test doit se dérouler en "half duplex".

La première étape du procédé décrit figure 5 est un test du modem origine (étape 40), visant à déterminer si ce modem est ou non en état d'émission "full duplex".

S'il est en état "full duplex", il est alors émis par ce modem origine un ordre de test en "full duplex" vers le modem extrémité concerné (étape 51).

La forme de l'ordre peut être bien entendu quelconque pour le procédé décrit: elle dépend des procédures d'échange adoptées. Dans un mode de réalisation préféré, cet ordre comporte trois parties: la première, sur $t$ bits, constitue un message d'identification et peut être constituée par une suite de $t$ bits identiques; la seconde partie est constituée par l'adresse du modem extrémité concerné, sur $u$ bits, et enfin la troisième partie, sur $v$ bits, caractérisé l'ordre concerné, à savoir dans le cas présent un ordre de test en "full duplex".

Par ailleurs, en ce qui concerne le canal choisi pour l'émission des ordres de test, ce peut être soit la bande de fréquence utilisée pour les données elles-mêmes, soit une bande différente. Dans ce dernier cas, cette bande se situe de préférence en bas de la bande passante des modems et les échanges d'informations s'effectuent à très basse vitesse, de l'ordre de la dizaine de Bauds, afin que les informations de test soient perturbées au minimum par une mauvaise liaison.

L'étape suivante (52) est constituée par la réception de l'ordre précédentent par le modem extrémité.

L'étape suivante (52) est un test: celui de l'état de fonctionnement ("full duplex" ou "half duplex") du modem extrémité.

Si le modem extrémité est en "full duplex", l'étape suivante (54) consiste en l'émission par le modem extrémité d'un acquittement, visant à informer le modem origine que le modem extrémité est prêt pour un test en "full duplex".

Dans un mode de réalisation préféré, la forme de l'acquittement est dans ce cas identique à la forme de l'ordre décrite précédemment, seule l'adresse du modem concerné étant remplacée par celle du modem origine.

L'étape suivante (55) consiste en la réception de l'acquittement par le modem origine.

Cette procédure se termine par un bloc 56 illustrant globalement le test en transmission "full duplex" tel que décrit figures 1, 2 et 4.

Si l'on reprend maintenant le premier test (40) de ce procédé, il apparaît que lorsque le modem origine n'est pas en "full duplex", ce dernier émet alors (étape 41) un ordre de test en "half duplex".

Cet ordre a de préférence la même forme que l'ordre décrit précédemment, seule la dernière partie étant modifiée pour demander un test en "half duplex".

La procédure se poursuit par la réception de l'ordre par le modem de l'extrémité (étape 42).

Dans ce cas, quelque soit l'état du modem extrémité ("half duplex" ou "full duplex"), ce dernier émet un acquittement pour un test en "half duplex": étape 43 sur la figure. La forme de cet acquittement est de préférence la même que celle de l'ordre de l'étape 41, au changement d'adresse près.

L'étape suivante (44) est la réception de cet acquittement par le modem origine, et la fin de la procédure (45) consiste en la reprise du procédé de la figure 1, à l'étape 2.

Si l'on reprend maintenant le deuxième test (53) mentionné précédemment, lorsque le modem extrémité n'est pas en fonctionnement "full duplex", la deuxième procédure décrite ci-dessus est prise entre les étapes 42 et 43, c'est-à-dire que le modem extrémité émet alors un acquittement pour un test en "half duplex".

La mise en oeuvre des procédés et du dispositif décrit ci-dessus permet donc de vérifier le bon fonctionnement d'une liaison entre deux modems à partir de l'un quelconque de ceux-ci, qu'il s'agisse d'une liaison point à point, c'est-à-dire ne comportant qu'une unité centrale et une unité périphérique, ou d'une branche particulière d'une liaison multipoints.

Par ailleurs, la description faite ci-dessus l'a été à titre d'exemple non limitatif. C'est ainsi notamment que les formes des signaux T et $E_a$ décrites peuvent être remplacées pour toutes autres formes aisément identifiables.

## Revendications

1. Procédé de test automatique d'une ligne de transmission de données numériques entre deux modems, comportant les étapes suivantes:

— l'émission (2) d'un message de test prédéfini (T) par le premier modem (20), choisi comme origine du test, vers le second modem (30), situé à l'autre extrémité de la ligne (15) à tester,
— la réception (3) de ce message par le modem extrémité (30);
— la comparaison (4) du message reçu (T') avec le message de test (T), fournissant une information représentant l'existence ou la non existence d'erreurs de transmission dans le sens modem origine vers modem extrémité, dite information d'erreur aller ($E_a$);

ledit procédé étant caractérisé par le fait qu'il comporte en outre:

— l'émission (6) par le modem extrémité (30) d'un premier message qui est constitué par le message de test (T) prédéfini, et d'un second message, contenant l'information d'erreur aller ($E_a$);
— la réception (7) par le modem origine (20) des deux messages;
— la comparaison (8) de la partie (T'') des messages reçus correspondant au premier message fournissant une information représentant l'existence ou la non existence d'erreurs de transmission dans le sens modem extrémité vers modem origine, dite information d'erreur retour ($E_r$);
— la reconnaissance (10) de l'information d'erreur aller ($E_a$) à partir de la partie ($E_a''$) des messages reçus correspondant au second message.

2. Procédé selon la revendication 1, caractérisé par le fait que le message de test (T) est constitué par une suite de bits de même valeur.

3. Procédé selon l'une des revendications précédentes, caractérisé par le fait que le second message, contenant l'information d'erreur aller ($E_a$), est constitué par une suite de bits de même valeur.

4. Procédé selon les revendications 2 et 3, caractérisé par le fait que les bits constituant le message de test (T) et les bits constituant le second message ont même valeur en l'absence d'erreurs aller.

5. Procédé selon la revendication 4, caractérisé par le fait que les bits constituant le message de test (T) et les bits constituant le second message sont en nombres prédéterminés et de valeurs opposées lorsqu'une erreur aller a été détectée.

6. Procédé selon la revendication 4, caractérisé par le fait que le message de test (T) est constitué par une suite de bits continue pendant tout le déroulement du procédé, et que lorsqu-une erreur aller ($E_a$) est détectée, le second message est constitué par un nombre prédéterminé de bits de valeur opposée à creux constituant le message de test (T).

7. Procédé selon l'une des revendications 5 ou 6, caractérisé par le fait que l'étape de reconnaissance de l'information d'erreur aller (10) est réalisée par comptage du nombre de bits (a) indicatifs d'erreurs, reçus par le modem origine (20), et comparaison de ce nombre à un seuil prédéfini.

8. Procédé selon la revendication 7, caractérisé par le fait que ledit seuil est égal à la moitié du nombre de bits constituant le second message, la réception d'un nombre (a), supérieur à ce seuil, de bits ayant une valeur opposée à la valeur choisie pour les bits de test, indiquant l'existence d'erreurs aller.

9. Procédé selon l'une des revendications précédentes, caractérisé par le fait qu'il comporte en outre une phase préliminaire (1) de détermination du mode de transmission des informations relatives au test, comportant les étapes suivantes:

— test (40) de l'état "half duplex" ou "full duplex" du modem origine (20);
— émission par le modem origine (20) d'un ordre de test en mode "half duplex" (41) ou "full duplex" (51), respectivement;
— réception (42, 52) de l'ordre par le modem extrémité (30) et test (53) de son propre état;
— émission d'un acquittement (43, 54) par le modem extrémité (30), déclenchant un test en "full duplex" seulement dans le cas où les deux modems sont dans cet état.

10. Procédé selon la revendication 9, caractérisé par le fait que les ordres de test comportent trois parties, comportant chacune un nombre déterminé de bits: une partie étant utilisée pour l'identification d'un ordre de test; une deuxième partie fournissant l'adresse du modem extrémité, et une troisième partie explicitant l'ordre considéré.

11. Procédé selon l'une des revendications précédentes, caractérisé par le fait que les informations relatives au test sont transmises sur un canal distinct de celui utilisé pour la transmission des données.

12. Dispositif de test automatique d'une ligne de transmission de données numériques connectée entre deux modems, assurant la mise en oeuvre du procédé selon l'une des revendications précédentes, comportant deux ensembles de circuits respectivement connectés à chacun des modems (30; 20), chaque ensemble comportant:

— des moyens de comparaison (32; 22) d'un signal de test (T'; T'') reçu par le modem (30; 20) auquel il est connecté à un signal de référence (T), fournissant une première information d'erreur ($E_a$; $E_r$) sur la transmission des données dans un premier sens (vers le modem), caractérisé par le fait qu'il comporte également
— des moyens de comptage, assurant la reconnaissance d'un message reçu ($E_a''$) représentant une secondaire l'information d'erreur ($E_a$) sur la transmission des données dans le second sens (à partir du modem).

**Patentansprüche**

1. Automatisches Testverfahren für eine digitale Datenübertragungsleitung zwischen zwei Modems, mit folgenden Verfahrensschritten:

— Aussendung (2) einer festgelegten Testnachricht (T) durch das erste Modem (20), das als Testursprung gewählt wird, in Richtung auf das zweite Modem (30), das sich am anderen Ende der zu testenden Leitung (15) befindet,
— Empfang (3) dieser Nachricht durch das endseitige Modem (30),
— Vergleich (4) der empfangenen Nachricht (T') mit der Testnachricht (T), wobei eine Information geliefert wird bezüglich des Vorhandenseins oder Nichtvorhandenseins von Übertragungsfehlern in der Richtung vom Ursprungsmodem zum endseitigen Modem, genannt Fehlerinformation in der ersten Richtung ($E_a$),
— dadurch gekennzeichnet, daß das Verfahren außerdem die folgenden Schritte umfaßt:
— Aussendung (6) einer ersten Nachricht durch das endseitige Modem (30), die aus der vorgegebenen Testnachricht (T) besteht und einer zweiten Nachricht, die die Fehlerinformation in der ersten Richtung ($E_a$) enthält,
— Empfang (7) der beiden Nachrichten durch das Ursprungsmodem (20),
— Vergleich (8) des der ersten Nachricht entsprechenden Teils (T'') der empfangenen Nachrichten, wobei eine Information über das Vorhandensein oder das Nichtvorhandensein von Übertragungsfehlern in der Richtung vom endseitigen Modem zum Ursprungsmodem geliefert wird, genannt Fehlerinformation betreffend die Gegenrichtung ($E_r$),
— Erkennung (10) der Fehlerinformation in der ersten Richtung ($E_a$) ausgehend vom dem Teil ($E_a''$) der empfangenen Nachrichten, der der zweiten Nachricht entspricht.

2. Verfahren nach Anspruch 1, dadurch gekennzeichnet, daß die Testnachricht (T) aus einer Folge von Bits gleichen Werts besteht.

3. Verfahren nach einem der vorhergehenden Ansprüche, dadurch gekennzeichnet, daß die zweite Nachricht, die die Fehlerinformation in die erste Richtung ($E_a$) enthält, aus einer Folge von Bits gleichen Werts besteht.

4. Verfahren nach einem der Ansprüche 2 und 3, dadurch gekennzeichnet, daß die die Testnachricht (T) bildenden Bits und die die zweite Nachricht bildenden Bits bei Nichtvorhandensein von Fehlern in der ersten Richtung denselben Wert haben.

5. Verfahren nach Anspruch 4, dadurch gekennzeichnet, daß die die Testnachricht (T) bildenden Bits und die die zweite Nachricht bildenden Bits in einer vorgegebenen Anzahl vorliegen und einander entgegengesetzte Werte aufweisen, wenn einer Fehler in der ersten Richtung erkannt worden ist.

6. Verfahren nach Anspruch 4, dadurch gekennzeichnet, daß die Testnachricht (T) aus einer über den ganzen Verfahrensablauf kontinuierlichen Bitfolge besteht und daß die zweite Nachricht aus einer vorgegebenen Anzahl von Bits des entgegengesetzten Werts im Vergleich zu den Bits, die die Testnachricht (T) bilden, zusammengesetzt ist, wenn ein Fehler in der ersten Richtung ($E_a$) entdeckt worden ist.

7. Verfahren nach einem der Ansprüche 5 oder 6, dadurch gekennzeichnet, daß der Verfahrensschritt der Erkennung der Fehlerinformation in der ersten Richtung (10) durch Zählen der Anzahl der Fehleranzeigebits (a) erfolgt, die vom Ursprungsmodem (20) empfangen wurden, worauf ein Vergleich dieser Anzahl mit einem vorgegebenen Schwellwert erfolgt.

8. Verfahren nach Anspruch 7, dadurch gekennzeichnet, daß der Schwellwert gleich der Hälfte der Anzahl der Bits ist, die die zweite Nachricht bilden, wobei der Empfang einer die Schwelle übersteigenden Anzahl (a) von Bits mit einem Wert entgegengesetzt zu dem für die Testbits gewählten Wert einen Hinweis auf Fehler in der ersten Richtung darstellt.

9. Verfahren nach einem der vorhergehenden Ansprüche, dadurch gekennzeichnet, daß es außerdem eine Vorphase (1) umfaßt, in der der Übertragungsmodus für die auf den Test bezogenen Informationen bestimmt wird, und die folgende Schritte umfaßt:

— Test (40) des Zustands "Halbduplex" oder "Vollduplex" des Ursprungsmodems (20),
— Aussendung eines Testbefehls im Halbduplexmode (41) bzw. dem Vollduplexmode (51) durch des Ursprungsmodem (20),
— Empfang (42, 52) des Befehls vom endseitigen Modem (30) und Überprüfung (53) seines fehlerfreien Zustands,
— Aussendung einer Quittung (43, 54) durch das endseitige Modem (30), durch die ein Vollduplextest nur in dem Fall ausgelöst wird, in dem die beiden Modems sich in diesem Zustand befinden.

10. Verfahren nach Anspruch 9, dadurch gekennzeichnet, daß die Testbefehle drei Teile mit je einer gegebenen Anzahl von Bits umfassen, nämlich einen Teil, der für die Identifizierung eines Testbefehls verwendet wird, einen zweiten Teil, der die Adresse des endseitigen Modems liefert, und einen dritten Teil, der den betrachteten Befehl erläutert.

11. Verfahren nach einem der vorhergehenden Ansprüche, dadurch gekennzeichnet, daß die den Test betreffenden Informationen auf einem anderen Kanal übertragen werden als dem, der für die Datenübertragung verwendet wird.

12. Automatische Testvorrichtung für eine digitale Datenübertragungsleitung, die zwischen zwei Modems liegt, zur Durchführung des Verfahrens nach einem der vorhergehenden Ansprüche, mit zwei Schaltkreisgruppen, die je an eines der Modems (30, 20) angeschlossen sind und je Vergleichsmittel (32; 22) zum Vergleich eines von dem mit ihm verbundenen Modem (30; 20) empfangenen Testsignals (T'; T'') mit einem Bezugssignal (T) aufweisen, wobei eine erste Fehlerinformation ($E_a$; $E_r$) über die Datenübertragung in einer ersten Richtung (zum Modem hin) geliefert wird, dadurch gekennzeichnet, daß sie außerdem Zählmittel enthält, mit denen die Erkennung einer eine zweite Fehlerinformation ($E_a$) darstellende empfangens Nachricht ($E_a''$) betreffend die Datenübertragung in der zweiten Richtung (ausgehend vom Modem) bewirkt wird.

## Claims

1. A method of automatically testing a digital data transmission line between two modems, including the following steps:

— transmission (2) of a predefined test message (T) from the first modem (20) selected as a starting-point of the test, to the second modem (30) located at the other end of the line (15) to be tested,
— reception (3) of this message by the end modem (30),
— comparison (4) of the received message (T') with the test message (T) for delivering an information representing the existence or non-existence of transmission errors in the direction considered from the starting-point modem to the end modem, called forward transmission error information ($E_a$),

that method being characterized in that it further comprises the following steps:

— transmission (6) by the end modem (30) of a first message which is constituted by the predefined test message (T), and of a second message containing the forward error information ($E_a$),
— reception (7) of the two messages by the starting-point modem (20),
— comparison (8) of that portion (T'') of the received messages corresponding to the first message, thus providing information representing the existence or the non-existence of the transmission errors in the direction considered from the end modem to the starting-point modem, called return transmission error information ($E_r$),
— recognition (10) of the forward error information ($E_a$) from that portion ($E_a''$) of the received messages corresponding to the second message.

2. A method according to claim 1, characterized in that the test message (T) is constituted by a sequence of bits having the same value.

3. A method according to one of the preceding claims, characterized in that the second message containing the first error information ($E_a$) is constituted by a sequence of bits having the same value.

4. A method according to claims 2 and 3, characterized in that the bits constituting the test message (T) and the bits constituting the second message have the same value when no forward errors are present.

5. A method according to claim 4, characterized in that the bits constituting the test message (T) and the bits constituting the second message are in predetermined numbers and opposite values when a forward error has been detected.

6. A method according to claim 4, characterized in that the test message (T) is constituted by a continuous sequence of bits throughout the duration of the test, and that the second message is constituted, when a forward error ($E_a$) is detected, by a predetermined number of bits, the value of which is opposed to that of the bits constituting the test message (T).

7. A method according to one of claims 5 or 6, characterized in that the step involving recognition of the forward error information (10) is performed by counting the number of error indicating bits received by the starting-point modem (20) and by comparing this number with a predefined threshold value.

8. A method according to claim 7, characterized in that said threshold value is equal to half the number of bits constituting the second message, the reception of bits greater in number than this threshold value and having a value opposite to the value selected from the test bits indicating the existence of forward errors.

9. A method according to any one of the preceding claims, characterized in that it further comprises a preliminary phase (1) for determining the transmission mode of the informations relating to the test, this phase comprising the following steps:

— a test (40) for the "half-duplex" state or the "full-duplex" state of the starting-point modem (20),
— transmission by the starting-point modem (20) of a test order in the "half-duplex" mode (41) or in the "full-duplex" mode (51) respectively,
— reception (42, 52) of the order by the end modem (30) and testing of its intrinsic state,
— transmission of an acknowledgment (43, 54) by the end modem (30) for initiating a test in "full duplex" operation only in the event when both modems are in this state.

10. A method according to claim 9, characterized in that the test orders comprise three portions, each containing a given number of bits, one portion being employed for identification of a test order, a second portion furnishing the address of the end modem and a third portion being employed for defining the considered order.

11. A method according to any one of the preceding claims, characterized in that the informations related to the test are transmitted over a channel which is distinct from the channel used for the data transmission.

12. An automatic test device for testing a digital data transmission line connected between two modems, for implementing the method according to any one of the preceding claims, comprising two circuit assemblies connected respectively to one of the modems (30; 20), each assembly comprising:

— means (32; 22) for comparing a test signal (T'; T'') received by the modem (30; 20) to which it is connected, with a reference signal (T) and furnishing a first error information ($E_a$; $E_r$) concerning the data transmission in a first direction (to the modem), characterized in that it further comprises
— counting means which ensure the recognition of a received message ($E_a''$) representing a secondary error information ($E_a$) on the data transmission in the second direction (from the modem).

| MISE EN RELATION DE TEST | *1* |
|---|---|

↓

| EMISSION DE T | *2* |

↓

| RECEPTION DE T' | *3* |

↓

| COMPARAISON T-T' → Ea | *4* | → | AFFICHAGE Ea | *5* |

↓

| EMISSION DE T + Ea | *6* |

↓

| RECEPTION DE T" + Ea" | *7* |

↓

| COMPARAISON T"- T → Er | *8* |   | *10* RECONNAISSANCE DE Ea |

↓                                   ↓

| AFFICHAGE Er | *9* |   | *11* AFFICHAGE Ea |

FIG. 1

FIG. 2

Fig. 3

FIG.4

Fig.5